# EUROPEAN PATENT SPECIFICATION

(11) **EP 1 739 946 B1**
(45) Date of publication and mention of the grant of the patent: **15.11.2017**
(21) Application number: 06116019.8
(22) Date of filing: 26.06.2006
(51) Int. Cl.: H04N 1/00

(54) **Light transmissive element**
Lichtdurchlässiges Element
Element transmissif

(30) Priority: 30.06.2005 US 169717
(43) Date of publication of application: 03.01.2007
(73) Proprietor: Xerox Corporation, Rochester, NY 14644 (US)
(72) Inventor: Herloski, Robert P., Webster, NY 14580 (US); Proctor, Douglas E, Gates, NY 14624 (US)
(74) Representative: Gill Jennings & Every LLP

(56) References cited:
- WO-A-98/26212
- WO-A1-98/26212
- US-A- 5 841 596
- US-A1- 2001 019 487
- US-A1- 2002 054 387
- US-A1- 2004 042 194
- US-A1- 2004 223 312
- US-A1- 2006 067 640
- US-B1- 6 464 366

## Description

The invention relates to a device including a light-transmissive element, for example for use in a document illumination system.

Document illumination systems or devices which are used for illuminating documents in order to scan, typically include an illumination source such as a tungsten lamp or fluorescent lamp and an opposing reflector. The illumination source is normally located on one side of an optical center line of the scanner under a platen or constant velocity transport (CVT) system while the reflector is positioned on the opposite side of the optical center line of the scanner under the platen or CVT system. The illumination source, in conjunction with the opposing reflector, provides illumination of the document or object being scanned by the scanner.

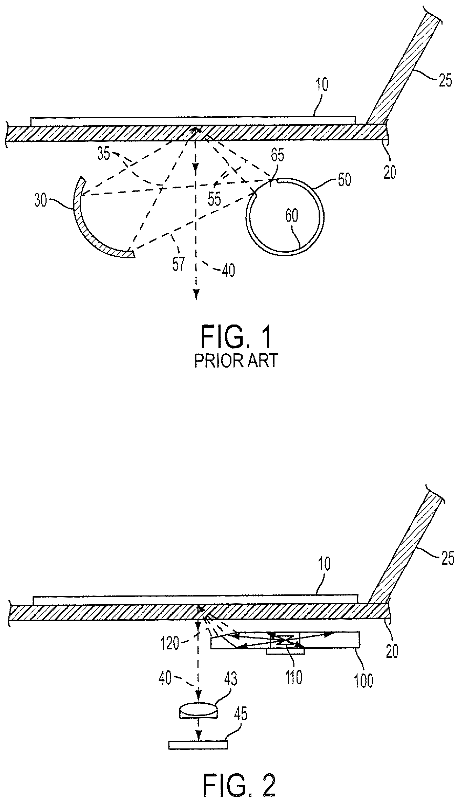

Figure 1 illustrates the components of a document illumination system which may be used as a stand alone scanner or in a copier. As described in US Patent 6,236,470, the system may be employed in either a light lens scanning system or a digital (image input terminal) scanning system (platen or CVT) in order to illuminate a document for reproduction, display, and/or storage in an electronic memory, magnetic medium, or optical disk. The illumination system of Figure 1 includes a platen 20 upon which a document 10 rests. The documents may be dispensed on the platen by means of a document handler 25. Document 10 is illuminated by a light source 50 which provides an active source of light to irradiate the illuminated region of the document. Typically, this source of light is provided by a linear fluorescent lamp (with or without aperture reflecting coatings 60 on the interior lamp surface to form an aperture 65), or by linear tungsten lamps. As noted above, the light source 50 is situated on one side of an optical center line 40. An imaging system (not shown) causes an image of the portion of the document immediately surrounding this optical centerline 40 to be projected onto a light sensing device such as a charge coupled device (CCD). It is known in the art that if the image is directed to a CCD sensor or a full width array sensor, the light reflected from the document about the optical centerline 40 is converted into electronic signals forming image data which electronically represent the document, and the data may be stored on a recording device such as memory storage in a computer.

On the opposite side of the optical center line 40, an opposing reflector 30 is situated. The opposing reflector 30 provides indirect illumination to the document being scanned by redirecting light which would normally not illuminate the document (light leaving the light source in a parallel or substantially parallel path with respect to the platen 20) back to the illuminated region of the document. Reflector 30 reflects scattered light 57 back 35 to the document 10 at an angle opposite from the angle of light being directly 55 emitted by the light source 50. This reflection suppresses shadowing on documents with nonplanar features.

Although illumination systems provide adequate illumination for a scanner, various problems are associated with conventional illumination systems. One such problem is the size of the lamp/reflector combination, where space can be premium. Another problem is the repair and maintenance of these relatively large illumination systems.

Further, a vast majority of document illuminators in digital input scanners are based on linear fluorescent lamps, including CCFLs (cold-cathode fluorescent lamps), which use small diameter (∼2 mm) mercury (Hg) fluorescent lamps. For high speed, high performance scanners, larger diameter (8-10 mm) xenon (Xe) linear fluorescent lamps are used in preference over larger diameter Hg linear fluorescent lamps. However, due to high voltage requirements and thermal sensitivity of the Hg lamps, as well as the desire to reduce mercury content in products, it is desirable to explore other light producing technologies such as light emitting diodes (LEDs) which may perform at high performance levels with less mechanical problems, less energy, high efficiency and less maintenance and cost. Such a side light emitting device is described by Robert S. West in US Patent 6,598,998. A different type of point-shaped light source is shown in US Patent Application Publication US 2002/0097578 A1 by Host Grainer. Still another line illumination device is taught in US Patent 6,017,130 to Tomihisa Saito, et al.

US2002/0054387 A1 discloses a light source and light guide for illuminating a document. US2004/0042194 A1 discloses a panel light source device for use in a liquid crystal display device comprising light sources, a light guide and a reflector. WO98/26212 A1 discloses a lighting apparatus adapted for use as a backlight for illuminating a display.

EP1255306 discloses a lens mounted to a light emitting diode package which internally redirects light within the lens so that a majority of light is emitted from the lens approximately perpendicular to a package axis of the light emitting diode package.

US2006/0050336 discloses a TMA which includes a housing, a light module and a light guide.

EP-A-1017222 describes a light guide for guiding light from a light source in a longitudinal direction and radiating the light to illuminate an object to be illuminated, which comprises a diffuser for diffusing the light from the light source along the longitudinal direction of the light guide, and a radiator for radiating the light diffused by the diffuser in a predetermined direction.

In accordance with the present invention a document illumination system, comprises the features of appended claim 1.

The present invention enables a small size light source to be incorporated in a different light-transmissive element (LTE) 100 shown in Figure 2 below, to provide a compact document illuminator.

We also provide an apparatus comprising a light-transmissive element (LTE) having an aperture and an LED embedded within the LTE wherein light emitted from the LED is internally reflected to the aperture, to illuminate a document; a lens adapted to receive a reflected image of the document and to focus the reflected image on to an array of sensors to convert the images to electronic signals; and a memory storage device to record the electronic signals as digital data.

Various exemplary embodiments will now be described with reference to the following figures.
Figure 1 is a drawing of a document illumination system showing the relationship of a lamp and a reflector with respect to a document to be scanned, according to prior art.
Figure 2 is a drawing of an embodiment showing the replacement of the lamp and the reflector of a document illumination system of Figure 1 with a disclosed light-transmissive element (LTE).
Figures 3 and 4 are front and side view drawings, respectively, of an example, not belonging to the invention, showing a light-transmissive element fitted with an LED in a cavity formed therein.
Figure 5 is a drawing of the placement of an LED in a different position in the light-transmissive element of Figures 3 and 4 showing how Total Internal Reflection (TIR) of a light ray may be obtained by positioning the LED in a manner to provide angle of incidence θᵢ of the light ray to be greater than the critical angle θ_{cr}.
Figures 6 and 7 are front and side view drawings, respectively; of another example, not belonging to the invention, showing the use of opaque specular linings on the cavity wall and diffusively scatterers on the rear wall of an aperture.
Figures 8 and 9 are front and side view drawings, respectively, of still another example, not belonging to the invention, showing the use of an optical V-notch to obtain TIR.
Figures 10 and 11 are front and side view drawings, respectively, of yet another example, not belonging to the invention, showing the use of graduated light scatterers to encourage light rays to collect at the apertures of Figures 6 and 7 in order to illuminate a document with maximum power and uniform illumination profile.
Figures 12 and 13 are front and side view drawings, respectively, of an example, not belonging to the invention, showing the disclosed light-transmissive element encased in white surround to capture any light that may escape from any of the surfaces of the light-transmissive element, and thereby increase the light power output and improve the illumination profile used to illuminate a document.
Figure 14 illustrates an example, not belonging to the invention, showing a dual-V shaped notch.
Figure 15 illustrates an example, not belonging to the invention, showing a series of V-shaped notches.
Figure 16 illustrates the invention showing an elliptical notch.
Figure 17 illustrates optical paths of light rays affected by the dual-V shaped notch in Figure 14.
Figure 18 illustrates optical paths of light rays affected by the elliptical notch shown in Figure 16.

In embodiments there is illustrated: a device for scanning a document using a side-emitting LED along with a linear light-transmissive element to illuminate the document.

The light-transmissive element (LTE) comprises a light guide 100 shown in Figure 2 interacting with platen 20 and document 10 of Figure 1; however, in the absence of a lamp/reflector arrangement and the associated complications thereof, as stated earlier. Light guide 100 comprises a light source region 110, which emits light that is directed out of the light guide as rays 120 to illuminate the document 10 on the platen 20, as shown in Figure 2. An imaging system 43, including a lens, causes an image of the portion of the document immediately surrounding this optical centerline 40 to be projected onto a light sensing device 45 comprising a linear array of photosensors (full width array sensor), a CCD sensor, or a photoreceptor (not shown). The light reflected from the document about the optical centerline 40 is converted by the light sensing device 45 into electronic signals forming image data which electronically represent the document, and the data may be stored on a recording device such as a memory storage device in a computer.

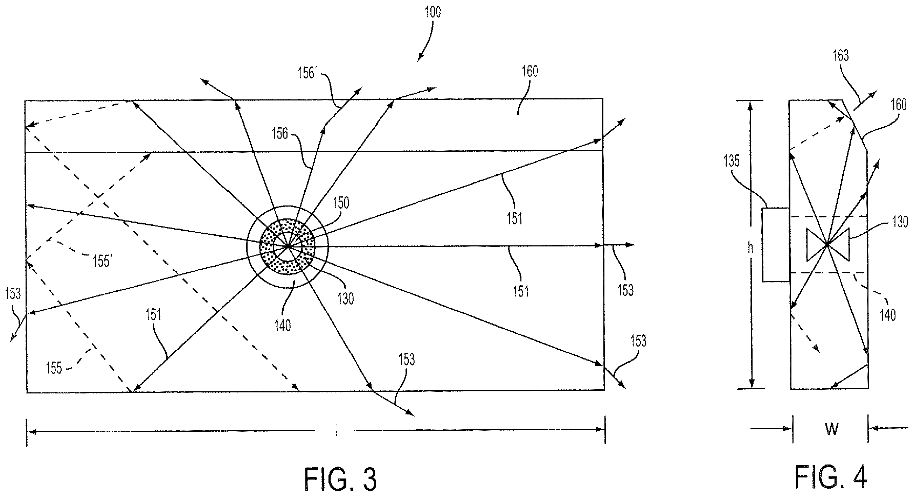

Figures 3 and 4 show a front view and a side view, respectively, of the light guide 100. The light guide is capable of illuminating, but not limited to, page width documents ranging from letter and legal size to A3, A4 sizes, and can be applicable to 36-inch, as well as 6-inch illuminators so that the length, I shown in Figure 3, may be as long as 320 mm or more. The width, w, may vary, but not limited to, from about 2 mm to about 6 mm, while the height, h, may vary from about 20 mm to about 25 mm. An LED 130 is fitted inside a cavity 140 formed in the light guide 100. Light emanating from a light source 150 inside the LED is coupled into the light guide through the walls of the cavity. A chamfered aperture 160 is formed in the light guide to receive light either directly or reflectively, as explained further below, from the LED and redirect it to illuminate a document (not shown) adjacent the aperture.

Light guide 100 comprises a clear acrylic material, although other similar materials may also be used. Cavity 140 is located centrally within the light guide, however, it will be understood that other non-central positions in the light guide may also be used. The cavity may be a through-hole that goes through the width, w, of the light guide shown in Figure 4, or a blind-hole that does not span the whole width, depending upon the manner in which it is desired to guide the light into and out of the illuminator. LED 130 may be held inside the cavity in a number of ways, including mounting the LED on a circuit board, which in turn forms a shoulder support 135 for the LED against the sidewall of the light guide 100, as shown in Figures 3 and 4. The circuit board may be a component of an electronic system (not shown) for controlling the light source 150 of the LED 130. Cavity walls are polished to aid in the unimpeded transmission of light from the LED 130 to other parts of the light guide 100.

In general, light rays 151 (shown in solid arrows) emitted by the LED 130 will emanate radially in all directions from cavity 140, some refracting 153 and escaping into the surrounding environment, some others reflecting 155 (shown in dashed arrows) back into the guide, and bouncing back and forth before leaving the guide altogether. Ray 155 goes through, what is called, a retroreflection such that ray 155' is reflected parallel to the original ray 151. Some rays will travel directly into the region of the aperture 160 and project 163 onto the surrounding area, including the document to be illuminated. It will be noted that a ray, such as 156 striking the chamfered surface of aperture 160 will refract into the surrounding environment medium in the direction 156' shown in Figure 3.

It is known in science that when light travels from a first medium to a second medium, it does not continue traveling in a straight line, but, as it crosses the boundary between the adjacent media, refracts or bends at an angle away from or towards a normal line drawn to the surface of the boundary between the first and second media. The angle which the incident ray in the first medium makes with the normal line is referred to as the angle of incidence θᵢ₁, and the angle which the transmitted ray in the second medium makes with the normal line is referred to as the angle of refraction, θᵣ₂. The relationship between the two angles depends upon the refractive index, η, of each of the two media, and is governed by the well-known Snell's law: Sin θᵢ₁/Sin θᵣ₂= ηᵣ₂/ηᵢ₁ where the subscripts denote the type of angle (incident, I, or refractive, r) of its respective medium (1 st or 2nd). Light travels faster in a less dense material and has higher refractive index. The minimum possible refractive index is 1.0000 for vacuum. Thus, it can be shown that if a ray of light passes across the boundary from a material in which it travels faster into a material in which travels slower, then the light ray will bend towards the normal line, and vice versa. It can also be shown that there is an incident angle, called the critical angle, θ_{cr}, at which the transmitted ray can be refracted at 90° to the normal, that is, parallel to the boundary surface. For any light ray in the first medium having an incident angle greater than θ_{cr}, none of the light ray will escape from the first medium into the second medium, thus yielding total reflection from the boundary back into the first medium, without any transmission of refracted light into the second medium. This phenomenon which occurs at θ_{cr} is known as Total Internal Reflection (TIR).

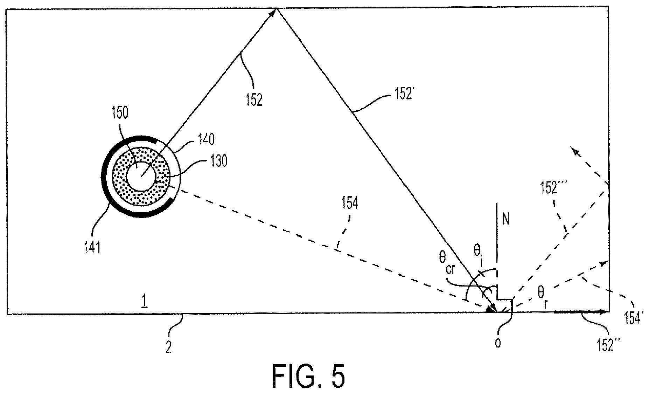

As an exemplar, the critical angle θ_{cr} for a ray from a light source in transparent acrylic entering into surrounding air medium, such as shown in Figure 5, is from about 36.0 degrees to about 45.6 degrees with η_{acrylic} from about 1.4 to about 1.7 and ηₐᵢᵣ=1.0003. It will be noted that TIR only occurs for light traveling from a first medium having a higher refractive index than the medium it is entering. Furthermore the angle of refraction, θᵣ, varies from 0 to 90°, and that with total internal reflection, no light power is lost in the reflection. Figure 5 illustrates the angle of incidence θᵢ of a light ray in general, and critical angle θ_{cr} when the angle of refraction θᵣ can be made 90° from the normal n in order to achieve TIR. Light ray 152' arriving at intersection O. formed by normal plane N and the boundary plane between medium 1 and medium 2 at critical angle θ_{cr} will have a refracted component at 90° 152" and reflected component 152'". The refracted component 152" remains parallel to the boundary plane and within medium 1. Any other light ray 154 that forms an incident angle θᵢ > θ_{cr} will then experience total internal reflection in the direction shown as 154'. In an embodiment, cavity 140 may be placed at different places within medium 1 in order to maximize light power and profile, while the cavity wall may be lined with an opaque lining 141 in order to establish the desired angle of incidence.

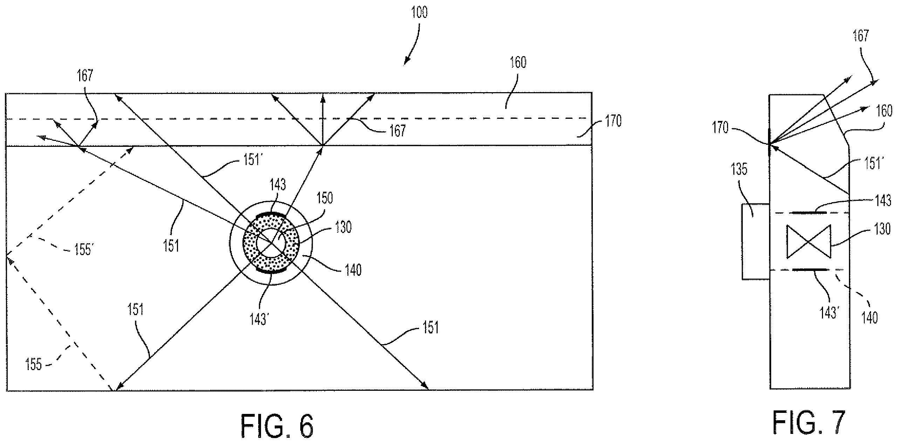

In embodiments herein further disclosed a light guide having an embedded LED to provide total internal reflection. This may be provided by forming cavity 140 having different cross-sections, including, but not limited to circle, square, rectangle and polygon. Certain portions of the cavity may also be lined with an opaque specular lining or light blockers 143 and 143' as shown in Figures 6 and 7 in order to allow light rays 151 directly emanating from light source 150 in LED 140 in such a manner so as to yield total internal reflection 155 from the walls of the light guide, while blocking those rays that would not have the proper angle of incidence, and therefore, not go through a total internal reflection. TIR rays are received at the chamfered aperture 160 for further transmission to illuminate a document not shown.

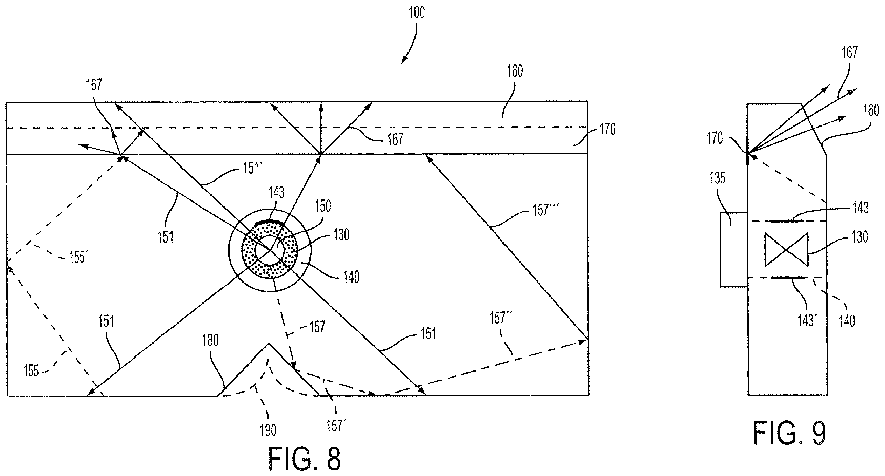

In another example, not belonging to the invention, direct 151' and/or reflected 155 light rays that collect at aperture 160 are further diffused 167 to enhance illumination power and illumination profile by providing additional opaque diffusively reflecting linings 170 at the rear wall of aperture 160, as shown in Figures 8 and 9. The opaque specular linings that are formed on the cavity walls (143, 143') as well as the diffusively reflecting scatterers on the aperture walls (170) may be continuous, discontinuous and of different shapes including, but not limited to, square, rectangle, triangle, polygon, and stretched versions of the same and other shapes.

The intensity and shape of the illumination emerging from aperture 160 is governed by how well the light emitted from the LED is directed to the aperture. As shown above, light emanating from a light source in a cavity such as shown in Figures 3 and 4 will project in all directions and only a portion of the light will emerge from the chamfered aperture 160 with a generally scattered shape and weak power due to the remaining portions of the light escaping (153) from all surfaces of the light-guide. On the other hand, through a judicious placement of light blockers 143 and 143' of an opaque specular lining, the light emanating from LED 130 may be directed in such a manner so as to encourage the light to reflect from the acrylic-air boundary surfaces of the light guide towards aperture 160, and be further strengthened by providing diffused scattering from additional patches 170 at the aperture, thereby yielding light rays leaving the aperture at an output strength and profile higher than that with the unaided light guide of Figures 3 and 4. The opaque blockers 143 and 143' shown in Figures 6 and 7 form sectors subtending approximately 60 degrees along the cavity wall, and other sectors of different angles and angles may be used to "fine tune" the specular characteristics of the light rays emanating from the LED for enhanced TIR. The opaque linings both at the cavity and at the aperture have a reflectivity of approximately 90% so that the light emanating from the LED is transmitted to the scanned document at a relatively high strength and uniform illumination profile in the directions shown by arrows 167.

An alternative example, not belonging to the invention, involves an optical V-notch 180 that is formed at the lower edge of the light guide of Figure 6 as shown in Figure 8. The notch provides an inclined surface different from the flat bottom surface of the light guide such that a ray that would have otherwise escaped to the surrounding medium is thereby reflected inward inside the light guide, eventually diffusing out at the aperture, thus adding more poser to the resultant illumination issuing from the light guide. Thus, the notch enhances TIR as shown by rays 157, 157', 157" and 157"' in the same Figure.

The example, not belonging to the invention, shown in Figure 8 may be further enhanced by providing a compound curve 190 (shown in phantom) in place of the V-notch shown in Figure 8. The compound curve 190 is calculated to provide even more enhanced total internal reflection of light rays incident on the curve. The calculation takes into account the over-all dimensions of the light guide and the placement of the LED within the light guide. In an aspect of the example shown in Figure 8, one or more optical notches may be incorporated into light guide 100.

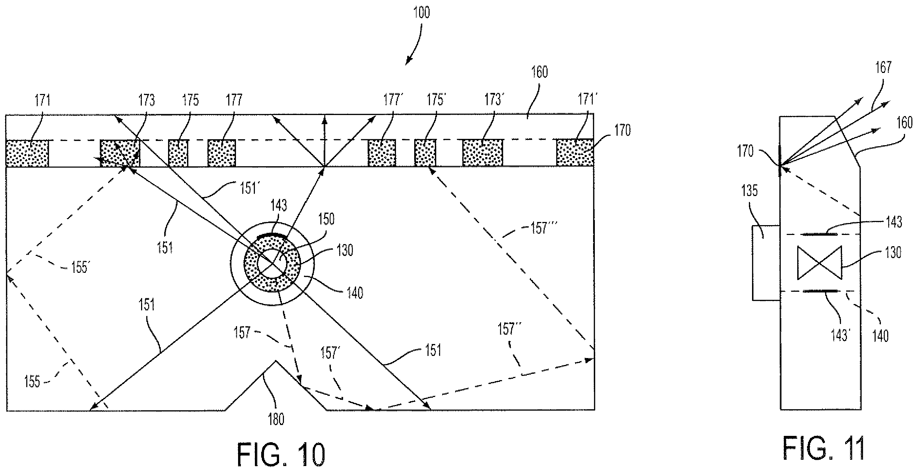

In still another example, not belonging to the invention, the rear surface of light guide 100 may be patterned with a series of diffusive white patches (171, 173, 175, 177, and 171', 173', 175', 177') that frustrate TIR and cause the internally reflected light to scatter and subsequently exit the light guide through the chamfered aperture 160 with minimal power loss and maximal uniform illumination profile, as shown in Figures 10 and 11. In one aspect, the size and position of the patches can be varied to custom tailor the shape of the illumination at the aperture. In another aspect, by making the white diffuse patches graduated, that is, smaller near the light source and progressively larger in length further away, the variability of the illumination profile from one end to another can be minimized resulting in a uniform profile with sufficient output power level along the whole length of the aperture. The aperture itself may be molded in various configurations to shape the illumination profile and enhance exposure efficiency.

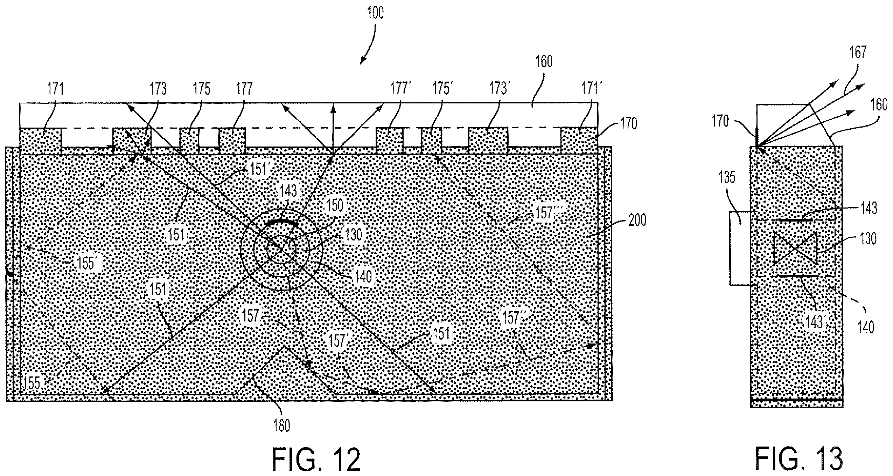

In an alternative example, not belonging to the invention, shown in Figures 12 and 13, the entire light guide 100 may be encased in an opaque white plastic surround 200 with a reflectivity from about 60 % to about 90% that has the effect of re-reflecting light rays that may have exited the light guide back into the light guide, thus enhancing efficiency.

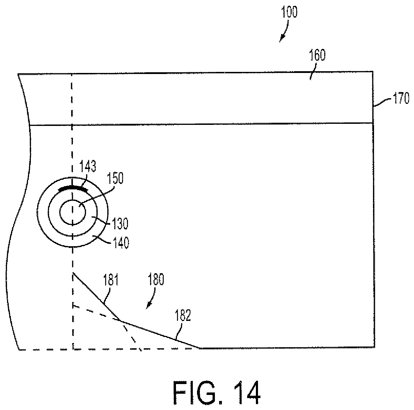

Returning to the optical V-notch 180 (or compound curve 190), Figure 14 illustrates an embodiment showing a dual-V shaped optical notch that includes a first V-notch 181 and a second V-notch 182. As shown in Figure 14, optical notches 181 and 182 have surfaces of different inclination from the flat bottom surface of the light guide 100. The degree of inclination of each of the optical notches 181 and 182 may be adjusted based on the overall configuration of the light guide 100 to enhance internal total reflection.

In Figure 14, only the right-hand side half of the dual-V notch 181, 182 is shown. The left-hand side half of the dual notch may be symmetrical or asymmetrical to the right-hand side half, depending on the overall configuration of the light guide 100, including the location of the LED 130 within the light guide 100, to enhance internal total reflection.

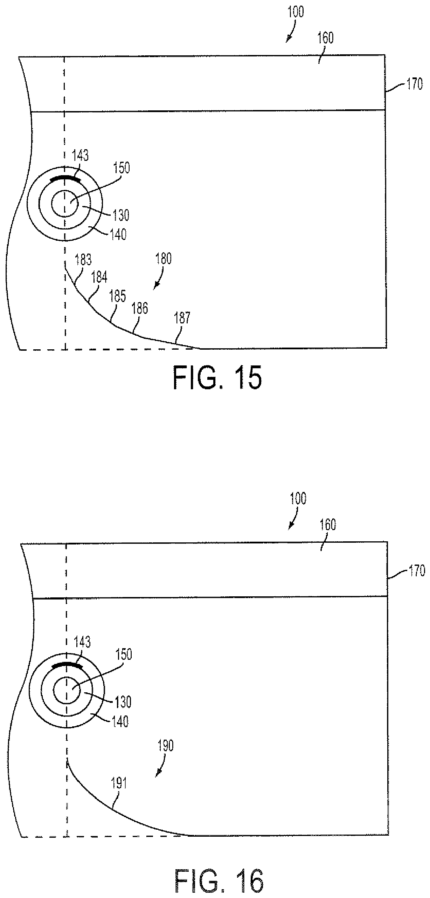

Figure 15 illustrates another example, not belonging to the invention, showing a series of V-shaped notches. As shown in Figure 15, the optical V-notch 180 of Figure 8 includes V-notches 183, 184, 185, 186 and 187. The inclination surfaces of V-notches 183-187 sustain a successively increasing angle from the flat bottom surface of the light guide 100. The inclination of the surface of each of the V-notches 183-187 may be adjusted according to the overall configuration of the light guide 100 to enhance internal total reflection. The left-hand side half (not shown) may be symmetrical or asymmetrical to the right-hand side half, shown in Figure 15, of the V-notches 183-187.

Although only five V-notches 183-187 are shown in Figure 15, one of ordinary skill understands that fewer or more V-notches may be used according to the overall configuration of the light guide 100 to enhance total internal reflection.

Figure 16 illustrates the invention showing an elliptical notch. As shown in Figure 16, the compound curve 190 in Figure 8 includes an elliptical curve 191. The curvature of the elliptical curve 191 may be adjusted according to the overall configuration of the light guide 100 to enhance total internal reflection. Also, the left-hand side half (not shown) of the notch may be symmetrical or asymmetrical to the right-hand side half (shown in Figure 16) of the notch.

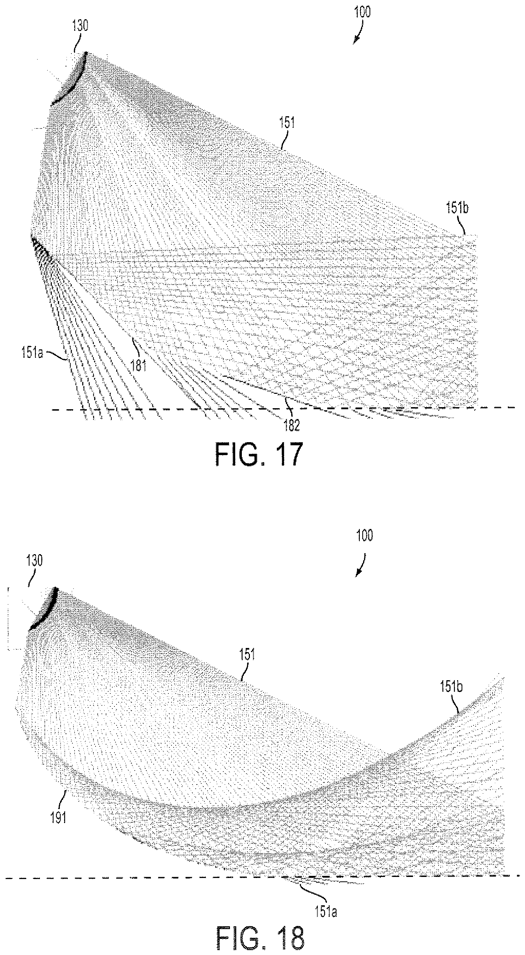

Figure 17 illustrates the optical paths of light rays 151 within the light guide 100 having a dual-V notch 181, 182 of Figure 14. As shown in Figure 17, the dual-V notch 181, 182 increases the amount of internally reflected light rays 151b, and reduces the amount of escaped light rays 151a. When properly configured, the dual-V notch 181, 182 of Figure 17 may provide enhanced total internal reflection compared to the single-V notch 180 shown in Figure 8.

Figure 18 illustrates the optical paths of light rays 151 in a light guide 100 having an elliptical notch 181 of Figure 16. As shown in Figure 18, the elliptical notch 191 increases the internally reflected light rays 151b, and reduces the amount of "escaped" light rays 151a. When properly configured, the elliptical notch 191 may enhance the total internal reflection within the light guide 100 compared to the dual-V notch 181, 182 in Figure 17.

## Claims

1. A document illumination system comprising:
a light-transmissive element (LTE) (100) comprising opposing top and bottom surfaces interconnected by opposing side surfaces; and
a light-emitting diode (LED) (130);
the LTE further being **characterised by**:
a chamfered aperture (160) extending between the top surface and a side surface of the LTE (100) positioned to receive light emitted from said LED (130), wherein the LTE is arranged such that light traverses said chamfered aperture (160) to illuminate a document in use;
a cavity (140) formed in said LTE (100), said LED (130) being positioned inside said cavity (140); and
an elliptical notch (180) formed in the bottom surface of the LTE (100) positioned to reflect light inward inside the LTE (100) and towards the chamfered aperture (160).

2. The document illumination system in accordance with claim 1, wherein said LTE (100) has a refractive index η_{LTE} from about 1.4 to about 1.7.

3. The document illumination system in accordance with any of the preceding claims, wherein said cavity (140) is lined with one or more opaque specular linings (143).

4. The document illumination system in accordance with claim 1 or claim 2, wherein said aperture is lined with an opaque diffusively reflecting scatterer (171-177), such as a white painted surface.

5. The document illumination system in accordance with any of the preceding claims, further comprising:
a lens (43) adapted to receive a reflected image of said document (10) and to focus said reflected image on to an array of sensors to convert the reflected image to electronic signals; and
a memory storage device to record said electronic signals as digital data.

6. The document illumination system according to claim 5, wherein said sensors comprise charge coupled devices (CCDs) (45).

## Patentansprüche

1. Dokumentenbeleuchtungssystem, umfassend:
ein lichtdurchlässiges Element (LTE) (100), das eine gegenüberliegende Oberseite und Unterseite aufweist, die durch gegenüberliegende Seitenflächen miteinander verbunden sind; und
eine Leuchtdiode (LED) (130);
wobei das LTE weiterhin **gekennzeichnet ist durch**:
eine sich zwischen der Oberseite und einer Seitenfläche des LTE (100) erstreckende abgeschrägte Öffnung (160), die so angeordnet ist, dass sie von der LED (130) emittiertes Licht empfängt, wobei das LTE so angeordnet ist, dass Licht die abgeschrägte Öffnung (160) durchquert, um ein verwendetes Dokument zu beleuchten;
einen Hohlraum (140), der in dem LTE (100) ausgebildet ist, wobei die LED (130) innerhalb des Hohlraums (140) angeordnet ist; und
eine elliptische Kerbe (180), die in der Unterseite des LTE (100) ausgebildet ist, die so positioniert ist, dass sie das Licht innerhalb des LTE (100) und in Richtung der abgeschrägten Öffnung (160) nach innen reflektiert.

2. Dokumentenbeleuchtungssystem nach Anspruch 1, bei dem das LTE (100) einen Brechungsindex η_{LTE} von etwa 1,4 bis etwa 1,7 hat.

3. Dokumentenbeleuchtungssystem nach einem der vorangehenden Ansprüche, bei dem der Hohlraum (140) mit einem oder mehreren undurchsichtigen Spiegelblenden (143) ausgekleidet ist.

4. Dokumentenbeleuchtungssystem nach Anspruch 1 oder Anspruch 2, bei dem die Öffnung mit einem opaken diffus reflektierenden Streuer (171-177), wie z.B. einer weiß gestrichenen Oberfläche, ausgekleidet ist.

5. Dokumentenbeleuchtungssystem nach einem der vorangehenden Ansprüche, weiterhin umfassend:
eine Linse (43), die dazu eingerichtet ist, ein reflektiertes Bild des Dokuments (10) zu empfangen und das reflektierte Bild auf eine Anordnung von Sensoren zu fokussieren, um das reflektierte Bild in elektronische Signale zu konvertieren; und
eine Speichervorrichtung zum Aufzeichnen der elektronischen Signale als digitale Daten.

6. Dokumentenbeleuchtungssystem nach Anspruch 5, bei dem die Sensoren ladungsgekoppelte Vorrichtungen (CCDs) (45) umfassen.

## Revendications

1. Système d'éclairage de document qui comprend :
un élément transmettant la lumière (LTE) (100) qui comprend des surfaces supérieure et inférieure opposées reliées l'une à l'autre par des surfaces latérales opposées ; et
une diode électroluminescente (LED) (130) ;
dans lequel le LTE est en outre **caractérisé par** :
une ouverture chanfreinée (160) qui s'étend entre la surface supérieure et une surface latérale du LTE (100) positionnée pour recevoir la lumière émise à partir de ladite LED (130), dans lequel le LTE est agencé de sorte que la lumière traverse ladite ouverture chanfreinée (160) pour éclairer un document en utilisation ;
une cavité (140) formée dans ledit LTE (100), dans lequel ladite LED (130) est positionnée à l'intérieur de ladite cavité (140) ; et
une encoche elliptique (180) formée dans la surface inférieure du LTE (100) positionnée pour réfléchir la lumière vers l'intérieur à l'intérieur du LTE (100) et vers l'ouverture chanfreinée (160).

2. Système d'éclairage de document selon la revendication 1, dans lequel ledit LTE (100) a un indice de réfraction η_{LTE} d'environ 1,4 à environ 1,7.

3. Système d'éclairage de document selon l'une quelconque des revendications précédentes, dans lequel ladite cavité (140) est doublée avec un ou plusieurs revêtements spéculaires opaques (143).

4. Système d'éclairage de document selon la revendication 1 ou la revendication 2, dans lequel ladite ouverture est doublée avec un diffuseur opaque réfléchissant de manière diffuse (171 à 177), tel qu'une surface peinte en blanc.

5. Système d'éclairage de document selon l'une quelconque des revendications précédentes, qui comprend en outre :
une lentille (43) conçue pour recevoir une image réfléchie dudit document (10) et pour focaliser ladite image réfléchie sur un réseau de capteurs pour convertir l'image réfléchie en des signaux électroniques ; et
un dispositif de mémorisation pour enregistrer lesdits signaux électroniques en tant que données numériques.

6. Système d'éclairage de document selon la revendication 5, dans lequel lesdits capteurs comprennent des dispositifs à transfert de charge (CCDs) (45).
